# EUROPEAN PATENT APPLICATION

(11) **EP 4 186 833 A1**
(43) Date of publication of application: **31.05.2023**
(21) Application number: 22197544.4
(22) Date of filing: 23.09.2022
(51) Int. Cl.: B65G 47/90, B25J 15/04, B65G 54/02

(54) **A HANDLE FOR A PRODUCTION LINE TRANSPORT TROLLEY, A METHOD OF RETOOLING THE HANDLE ACCORDING TO THE INVENTION, A SET OF HANDLES ACCORDING TO THE INVENTION AND A METHOD OF TRANSPORTING PRODUCT USING AT LEAST TWO SETS OF HANDLES ACCORDING TO THE INVENTION**

(30) Priority: 28.09.2021 PL 43905121
(71) Applicant: UNILOGO ROBOTICS SPOLKA Z OGRANICZONA ODPOWIEDZIALNOSCIA, 05-500 Piaseczno (PL)
(72) Inventor: NOWACKI, Tomasz, 02-834 Warszawa (PL); PAPIERNIK, Marcin, 96-513 Nowa Sucha (PL)
(74) Representative: AOMB Polska Sp. z.o.o.

(57) **Abstract**

The subject of the invention is a holder for a production line transport cart, characterized in that it comprises a holder base including a socket and a mount of the base to a transport cart, and a holder arm including an arm plug for insertion into the socket and two product contact areas located on opposite sides of the holder arm. The invention also relates to a method of retooling the holder according to the invention. The subject of the invention is a assembly of holders according to the invention, characterized in that it comprises two cooperating holders arranged successively in line on carriages on a linear drive. The invention also relates to a method of transporting a product using at least two assemblies of holders according to the invention

## Description

### Field of invention

The invention relates to a assembly of holders for a production line transport cart (e.g., packaging or setup) for transporting through the product line between successive functional modules. The invention also relates to a method of retooling the holder of a holder assembly according to the invention and a method of transporting a product using at least one assembly of holders according to the invention. Inventions will find application in the transport of products on the production line, e.g. bottles and packaging between stations for feeding, dosing, feeding an additional component, capping and weighing.

### State of the art

Several types of holders, lugs and grippers are known in the art which are attached to a transport cart for transporting products on the line. Patent document No. US4666367A discloses carts having gripping elements for transporting products. The described structure and arrangement do not indicate the possibility of using it to grab the product in cooperation with an adjacent cart equipped with an identical gripper.

Another well-known solution is the Siemens cart, developed in cooperation with Festo, using a series of transport carts (carriers) that can operate as separate, independent units or can cooperate with each other. The product in the suitable grip can be transported linearly, while the gripping of the product between two carts is not described, nor is the possibility of using the holder for this purpose on both sides.

Another known solution is a cart designed by the Beckhoff company equipped with gripping elements (e.g. clamps, tongs, holders) enabling them to grip the transported product. In order to properly grip the product, the carts work together in pairs, however, the system does not have the possibility of gripping two different products on both sides of the cart with a double-sided holder.

The challenge for production lines is the elimination of retooling time from one type of packaging to another. This is achieved by using puck or pax supports, thus eliminating time-consuming adjustments of functional elements. Another way in the case of linear drives is to replace the entire carts or entire platforms/plates that can be mounted on these carts. The disadvantage of each of the methods is the need to stop production for a few - several minutes, the need to store often quite a large number of elements and their high cost.

### Summary of the invention

The object of the present invention is to create an assembly of holders that allows different products with a different shape or diameter to be gripped with two different product contact areas. In addition, the design of the holders allows to minimize the space taken and allows for their quick replacement without the use of tools. The versatility of such holders minimizes their costs

The subject of the invention is a holder for a production line transport cart, characterized in that it comprises a holder base including a socket and a mount of the base to a transport cart, and a holder arm including an arm plug for insertion into the socket and two product contact areas located on opposite sides of the holder arm.

Preferably, the holder according to the invention is characterized in that the two product contact areas on opposite sides of the holder arm are symmetrical.

Preferably, the holder according to the invention is characterized in that the two product contact areas on opposite sides of the holder arm are asymmetrical.

Preferably, the holder according to the invention is characterized in that the holder arm is made of a deformable material.

Preferably, the holder according to the invention is characterized in that it is made in additive technology.

Preferably, the holder of the invention is characterized in that the shape of the socket of the holder base defines the connectivity to the arm plug and prevents the holder from being incorrectly assembled.

Preferably, the holder of the invention is characterized in that the holder base comprises a base attachment member in the form of a clip, magnet or other attachment member cooperating with a twin attachment member of the arm.

Preferably, the holder according to the invention is characterized in that the holder arm, in the product contact area or in the opposite product contact area, comprises at least one element locking the transported product relative to the holder.

Preferably, the holder according to the invention is characterized in that the element that locks the transported product relative to the holder is in the form of a immobilizing suction cup that secures it by means of a negative pressure or an area of increased friction.

The invention also relates to a method of retooling the holder according to the invention, characterized in that:
a. The holder arm plug is removed from the holder base socket attached to the transport cart by means of the base mount
b. A new arm of the holder is created with a plug compatible with the socket of the base of the holder using additive technology, preferably 3D printing
c. A compatible plug of the new holder arm obtained in step b is inserted into the socket of the holder base fixed to the transport cart by means of the base mount.

The subject of the invention is also the assembly of holders according to the invention, characterized in that it comprises two cooperating holders placed respectively in line on the carts on the linear drive.

The invention also relates to a method for transporting a product using at least two assemblies of holders according to the invention, characterized in that:
1. The product is placed between the inner product contact areas of the holder assembly,
2. The presence of the product is checked on the basis of the nominal distance between the two holders of the holder assembly,
3. The product is placed between the outer product contact area of the holder assembly and the outer product contact area of the next holder assembly,
4. The presence of the product is checked on the basis of the nominal distance between two consecutive assemblies of holders,
5. The product is being transported.

### Description of the drawings

The invention will now be illustrated in more detail in a non-limiting preferred embodiment with reference to the accompanying drawings, in which:

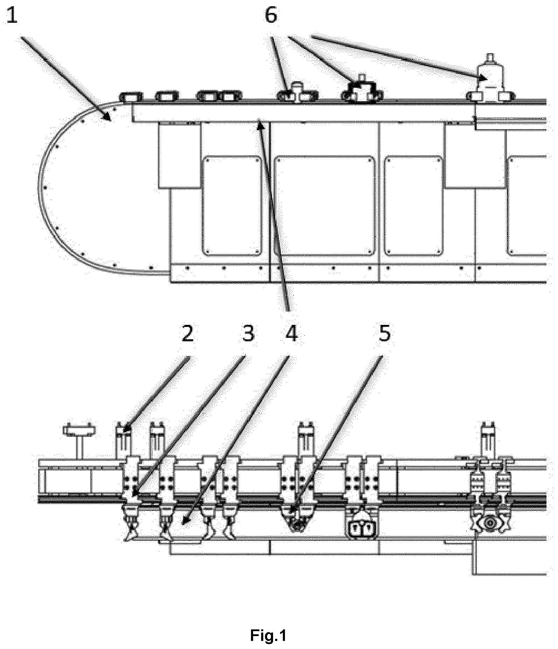

- Fig. 1: shows the location of the holder on a transport cart

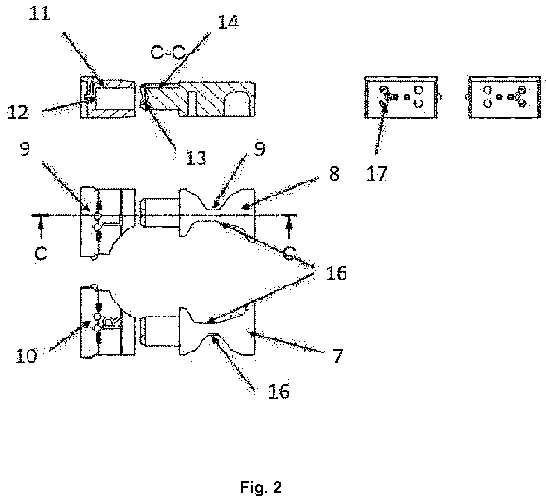

- Fig. 2: shows an example of the arrangement of double-sided holders in the removable version
- Fig. 3: shows the working position of the holders 5 for the first product shape 6
- Fig. 4: shows the working position of the holders 5 for the second product shape 6
- Fig. 5: shows an exemplary holder 5 of the invention

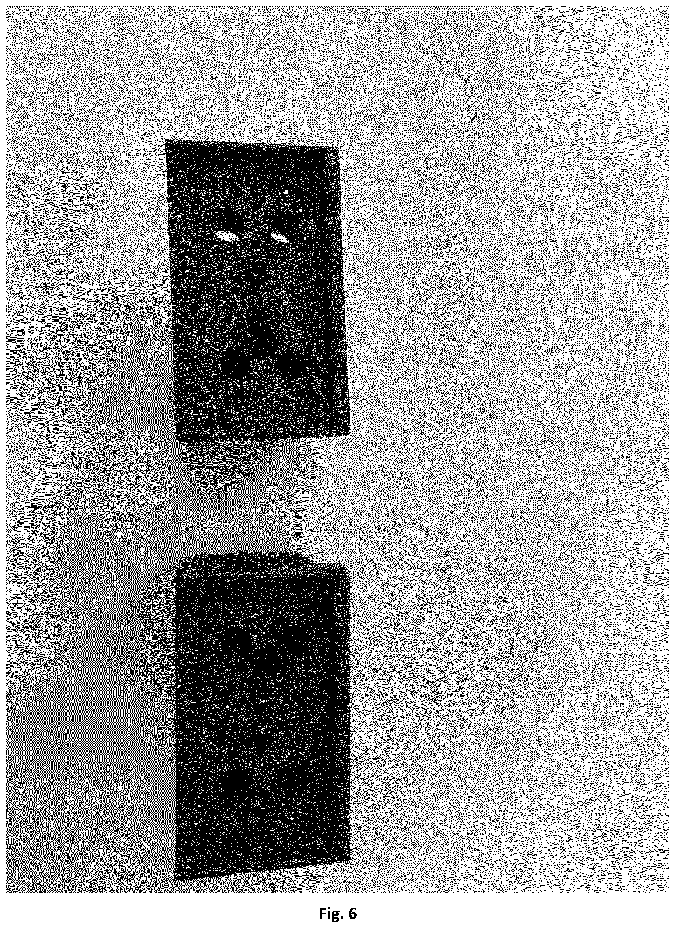

- Fig. 6: shows an exemplary holder 5 of the invention

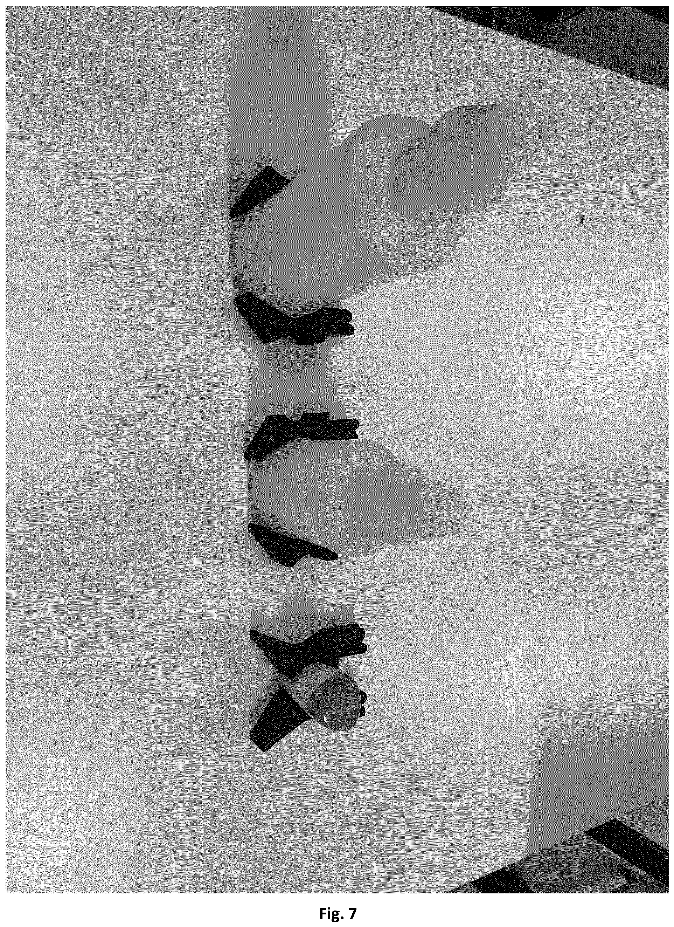

- Fig. 7: shows an exemplary holder 5 of the invention

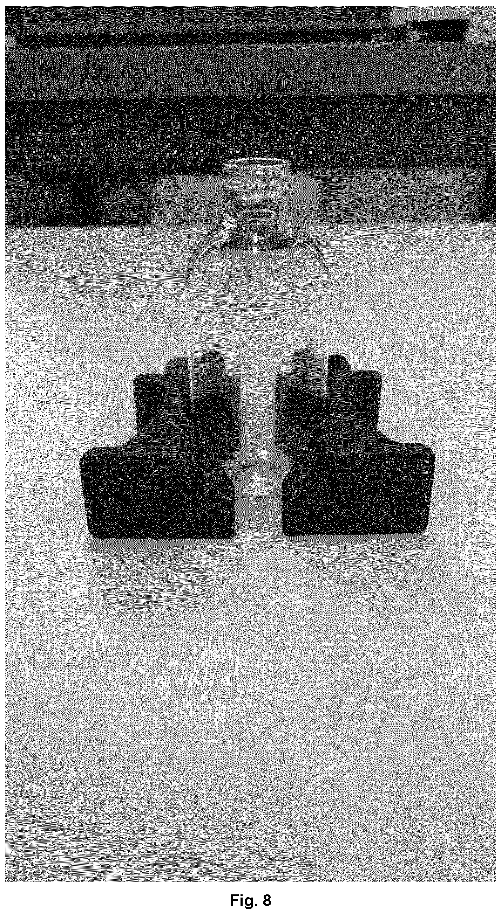

- Fig. 8: shows an exemplary holder 5 of the invention

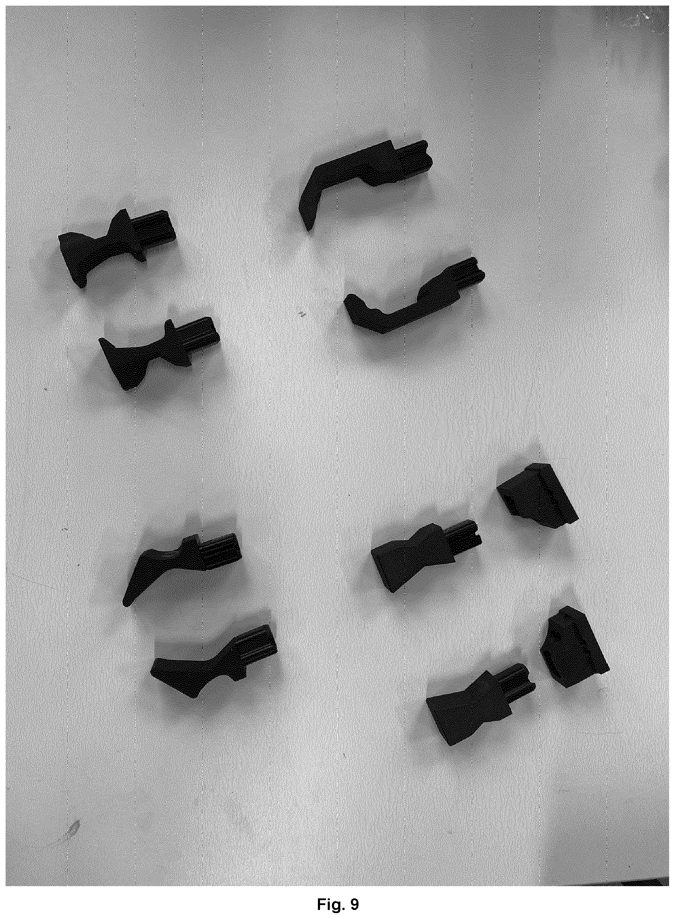

- Fig. 9: shows an exemplary holder 5 of the invention

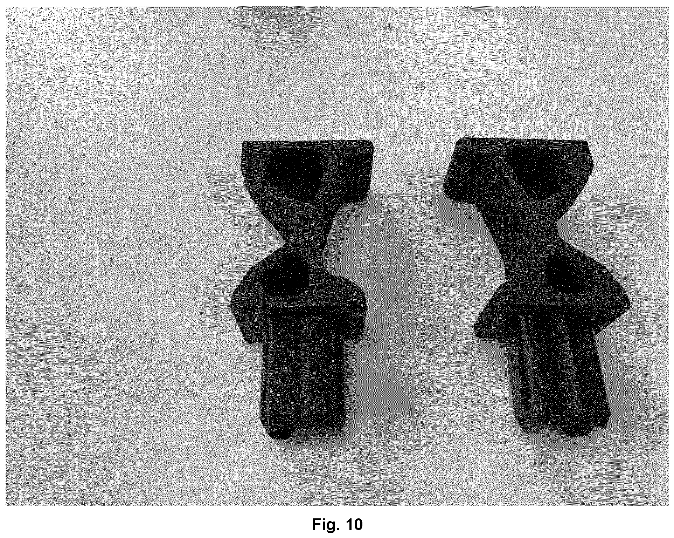

- Fig. 10: shows an exemplary holder 5 of the invention

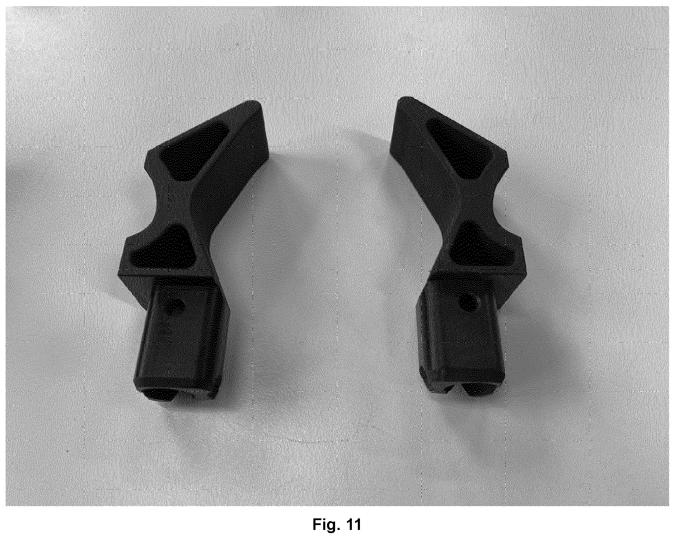

- Fig. 11: shows an exemplary holder 5 of the invention

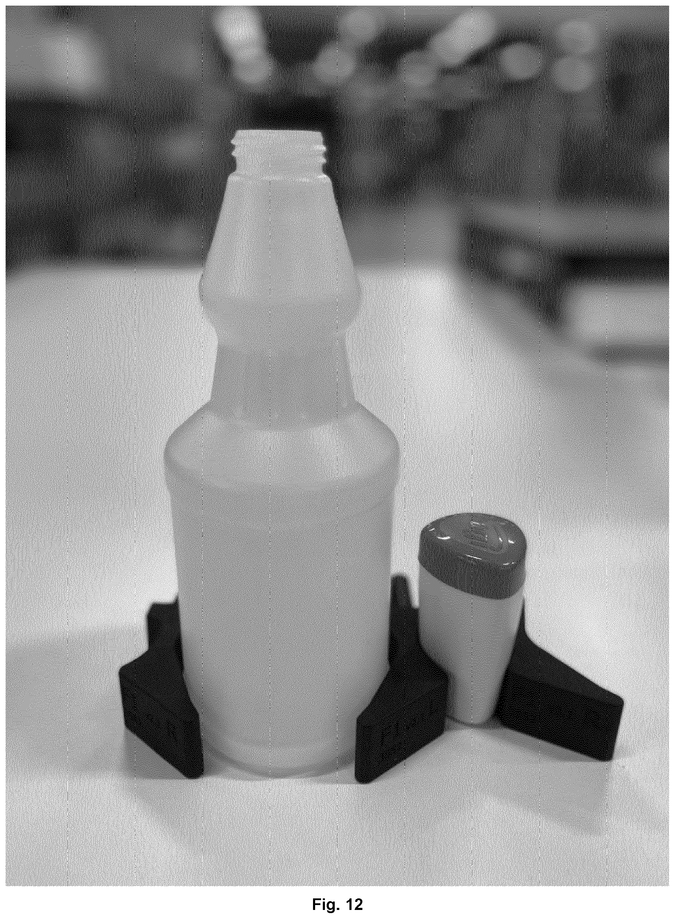

- Fig. 12: shows an exemplary holder 5 of the invention

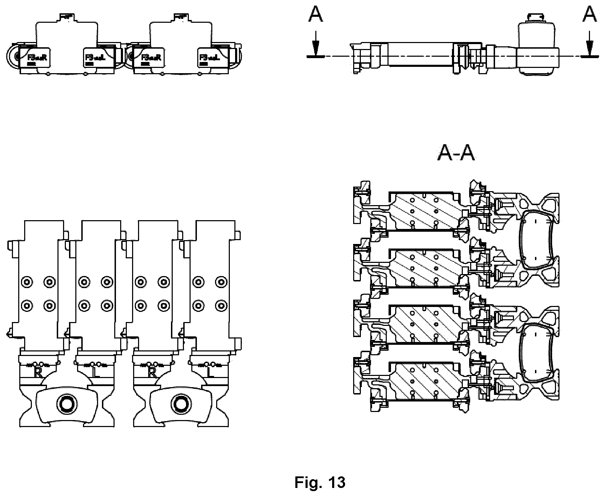

- Fig. 13: shows the working position of the holders 5 for the third product shape

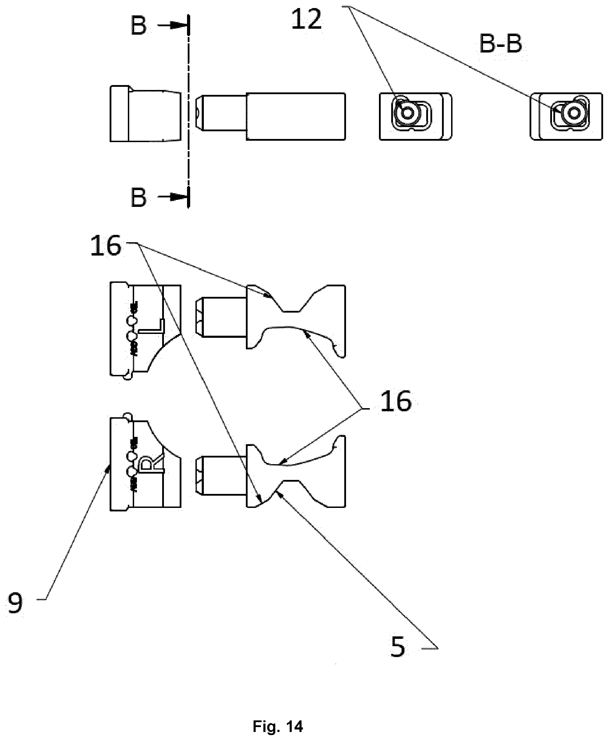

- Fig. 14: shows an example of the arrangement of double-sided holders in the removable version

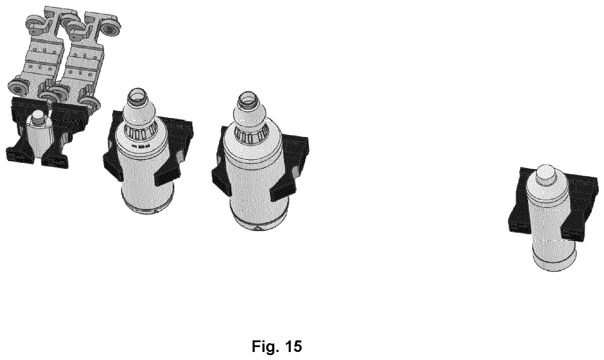

- Fig. 15: shows an exemplary holder 5 of the invention

### Preferred embodiments of the invention

The subject of the invention is a holder 5 for a transport cart 3 of a production line. The holder 5 according to the invention comprises a holder base 9, 10 including a socket 11 and a base mount 17 to a transport cart, and a holder arm 7, 8 including an arm plug 14 for insertion into the socket 11 and two contact areas 16 with the product 6 located on opposite sides of the holder arm 7, 8. In a preferred embodiment, the two contact areas 16 with the product 6 provided on opposite sides of the holder arm 7, 8 are symmetrical. In another, preferred embodiment, the two contact areas 16 with the product 6 arranged on opposite sides of the holder arm 7, 8 are asymmetrical. In a preferred embodiment, the holder arm 7, 8 is made of a deformable material. In a preferred embodiment, the holder 5 is made with additive technology. In a preferred embodiment, the shape of the socket 11 of the holder base 9, 10 defines the connectivity to the plug 14 of the arm and prevents the holder 5 from being incorrectly assembled. In a preferred embodiment, the base of the holder 9, 10 comprises a attachment element of the base 12 in the form of a latch, magnet or other attachment element cooperating with a twin attachment element 13 of the arm. In a preferred embodiment, the holder arm 7, 8, in the contact area 6 with the product 8 or in the opposite contact area 16 with the product 8, comprises at least one element locking the transported product 6 against the holder 5. In an even more preferred embodiment, the element locking the transported product 6 relative to the holder 5 is in the form of a immobilizing suction cup that is immobilized by means of a negative pressure or an area of increased friction

The invention also relates to a method of retooling the holder according to the invention, characterized in that:
A. The plug 14 of the holder arm 7, 8 is removed from the socket 11 of the holder base 9, 10 attached to the transport cart 3 by means of the base mount 17
B. A new holder arm 7, 8 is created with a plug 14 compatible with socket 11 of the holder base 9, 10 by means of additive technology, preferably 3D printing
C. A compatible plug 14 of the new holder arm 7, 8 obtained in stage B is inserted into the socket 11 of the holder base 9, 10 fixed to the transport cart 3 by means of the base mount 17.

The invention also relates to a method of transporting a product using at least two assemblies of holders according to the invention, characterized in that:
1. The product 6 is placed between the inner product contact areas 16 of the holder assembly,
2. The presence of the product 6 is checked on the basis of the nominal distance between the two holders 5 of the holder assembly,
3. The product 6 is placed between the outer contact area 16 with the product, of the holder assembly, and the outer contact area 16 with the product of the next assembly of holders,
4. The presence of the product 6 is checked on the basis of the nominal distance between two consecutive sets of holders,
5. The product 6 is transported.

In an exemplary embodiment, the transport cart comprises a linear drive 1 that is attached to the base plate/frame of the transport device by means of attachment holders for the linear drive 2. Exemplary carts 3 of the linear drive 1 slide products 6 of different size and shape over a stationary slide 4 via holders 5 attached thereto. The slide 4 does not move during operation of the device, however, it is adjustable in height. A person skilled in the art knows the possible modifications as well as the available linear drives and carts, and the examples provided herein and in the drawings are not intended to limit the scope of the invention, but to only present a preferred embodiment thereof.

The used transport cart 3 with 3D printed holders 5, each of which contact area 16 with the product allows gripping the product 6 of a different shape or diameter. When changing the diameter/width of the product 6, appropriate software (not being the subject of the invention) allows to increase or decrease the distance of the holders 5 from each other, and with a large change, it allows the products to be transported 6 by elements created on the other side of the pre-held holder 5. As an additional element, the structure of the holders 5 was used, that allows for a very quick replacement, i.e. socket 11 and arm plug 14, without the use of additional tools. The area occupied by the tools of the device with about 100 holders 5 is on an area of 0.332 m² with a maximum height of 30 mm. Compared to the traditional supports, it gives about 7.4 sets of formats placed in the place occupied by one traditional format. It was assumed that a single assembly of holders 5 could be used for at least two types of products 6 (minimum quantity), this gives 15 times more quantity on the same surface.

The use of such holders 5 also minimizes the possibility of human error during retooling due to the program handling of the position of the holders 5.

The holders can be made in a symmetrical and asymmetrical version. The arm 7 of the left holder and the arm 8 of the right holder have, on one side, a contact area 16 with a product with an outline of one product shape 6, and on the opposite outer side, a contact area 16 with a product with a contour of the other product's shape 6. The shape of the contours of each of the contact areas 16 with the product can be any, it can be, for example, a pile or other geometric element which ensures the correct holding of the product 6 at a fixed or variable distance of the carts 3 of the drive driving the carts, to which are attached the holders 5 in a non-interchangeable form or their holder bases 9, 10 b in the case of interchangeable implementation. The base 9 of the right holder 9 and the base 10 of the left holder have a plug or socket formed therein to prevent incorrect mounting of the holder 5 and to hold the attachment element of the base 12 in the correct position in the form of a latch, magnet or other attachment element cooperating with a twin attachment element 13 of the arm. Each of the holders has a plug or socket. The sockets can be a shaped socket, where the shape of the socket defines the possibility of connection with the plug, thus preventing the wrong configuration of the holder arm with the base and simplifying the retooling process. Moreover, the holder arm 7, 8 according to the invention may additionally include at least one locking element for the transported product 6 relative to the holder 5. It is also possible to combine the locking elements present in the holder arm 7, 8, both in the same contact area 16 with the product 5 and the opposing contact areas 16 with the product, of the holder 5. In particular, the locking element may be a suction cup which fixes the product 6 by means of a negative pressure (in this case, the holder 5 comprises technical elements enabling the production of a negative pressure in the suction cup, e.g. area of increased friction, e.g. by means of a natural or synthetic polymer. The person skilled in the art knows the possibilities of modification as well as the available locking elements, and the examples provided herein and in the figures are not intended to restrict the scope of the invention, but only to present a preferred embodiment thereof.

It should also be emphasized that although the socket 11 placed in the holder base 9, 10 and the arm plug 14 placed on the holder 7, 8 are shown in the figures, the reverse arrangement is within the scope of the protection of the invention, i.e. the plug is placed on the holder base 9, 10, and the socket is placed in the holder arm 7, 8.

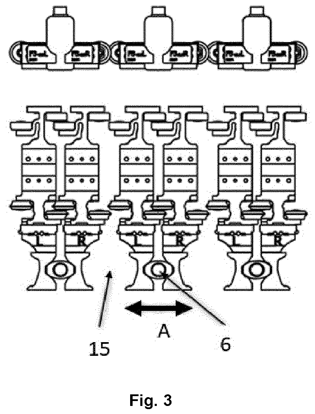

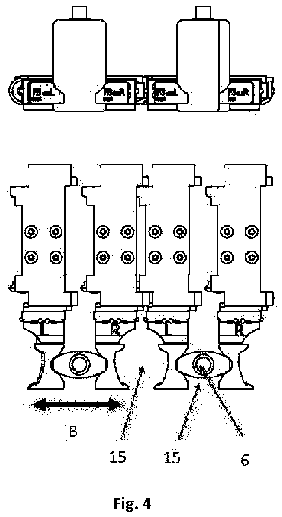

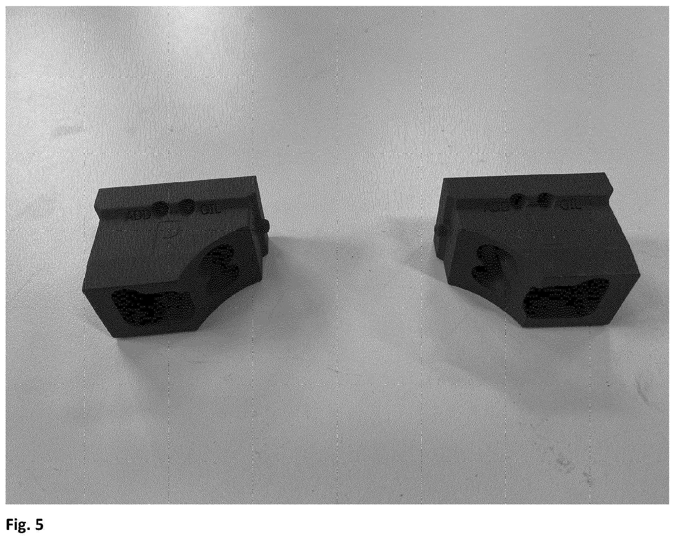

Some of the possible working positions of the holder 5 for different sizes of products 6 are shown in figures 3, 4 and 5. According to the figures, the product 6 is located between two holders 5 in the workspace 15, depending on the size of the product 6, the distance between the holders 5 changes.

In the described invention, the holders 5 and their nominal distance when holding the product 6 is also used to control the presence of products 6 in order to eliminate empty spaces for products 6. for example, it is necessary to dose or close a given workspace, whether there is no product 6 in it, and in which workspace the process should bypass other possibilities of controlling the presence of the product 6 as well as their combinations, and the examples provided here and in the figures are not intended to limit the scope the invention, but only to present its preferred embodiment..

The assembly of holders 5 according to the invention allows for the simultaneous transport of products 6 of different shapes or diameters. The structure of the holders 5 allows to minimize the occupied space and quick retooling without the use of special tools. The very versatility of the holders 5 minimizes their costs.

The following markings are used in the drawings:::
- 1 -: Linear dive
- 2 -: Linear drive mounting holder
- 3 -: Cart
- 4 -: Slide
- 5 -: Holder
- 6 -: Product
- 7 -: Holder arm (left)
- 8 -: Holder arm (right)
- 9 -: Holder base (right)
- 10 -: Holder base (left)
- 11 -: Socket
- 12 -: Base attachment element
- 13 -: Arm attachment element
- 14 -: Arm plug
- 15 -: Workspace
- 16 -: Contact area with the product
- 17 -: Base mount

## Claims

1. A holder (5) for a production line transport cart (3) **characterized in that** it comprises a holder base (9, 10) that comprises a socket (11) and a base mount (17) to the transport cart, and a holder arm (7, 8) that comprises a plug (14) of the arm for insertion into the socket (11) and two contact areas (16) with the product (6) located on opposite sides of the holder arm (7, 8)

2. The holder according to claim 1, **characterized in that** the two contact areas (16) with the product (6) located on opposite sides of the holder arm (7, 8) are symmetrical

3. The holder according to claim 1, **characterized in that** the two contact areas (16) with the product (6) located on opposite sides of the holder arm (7, 8) are asymmetrical.

4. The holder according to any of the claims 1-3, **characterized in that** the arm of the holder (7, 8) is made of a deformable material.

5. The holder according to any of the 1-4 **characterized in that** it is made by means of an additive technology

6. The holder according to any of the claims 1 to 5, **characterized in that** the shape of the socket (11) of the holder base (9, 10) defines the connectivity to the arm plug (14) and prevents the holder (5) from being incorrectly assembled.

7. The holder according to any of the claims 1-6, **characterized in that** the holder base (9, 10) comprises a attachment element of the base (12) in the form of a latch, magnet or other attachment element cooperating with a twin attachment element (13) of the arm.

8. The holder according to any of the claims 1-7, **characterized in that** holder arm (7, 8), in the contact area (6) with the product (8) or in the opposite contact area (16) with the product (8), comprises at least one element that locks the transported product (6) relative to the holder (5)

9. The holder according claim 8, **characterized in that** the element that locks the transported product (6) relative to the holder (5) is in the form of a immobilizing suction cup that locks it by means of a negative pressure or an area of increased friction.

10. A method of retooling a holder as defined in anyone of claims 1-9, **characterized in that:**
a. The plug (14) of the holder arm (7, 8) is removed from the socket (11) of the holder base (9, 10) attached to the transport cart (3) by means of base mount (17)
b. A new arm of the holder (7, 8) is created with a plug (14) compatible with the socket (11) of the holder base (9, 10) by means of additive technology, preferably 3D printing
c. A compatible plug (14) of the new holder arm (7, 8) obtained in step b is inserted into the socket (11) of the holder base (9, 10) fixed to the transport cart (3) by means of the base mount (17).

11. The assembly of holders according any one of the claims 1-9, **characterized in that** it comprises two cooperating holders (5) arranged respectively in line on the carts (3) on the linear drive (1).

12. A method of transporting a product using at least two sets of holders as defined in claim 11, **characterized in that:**
A. The product (6) is placed between the inner contact areas (16) with the product of holder assembly,
B. The presence of the product (6) is checked on the basis of the nominal distance between the two holders (5) of the holder assembly,
C. The product (6) is placed between the outer contact area (16) with the product of the holder assembly and the outer contact area (16) with the product of the next holder assembly.
D. The presence of the product (6) is checked on the basis of the nominal distance between two consecutive holder assemblies,
E. The product is transported (6).
